# EUROPÄISCHE PATENTSCHRIFT

(11) **EP 4 215 772 B1**
(45) Veröffentlichungstag und Bekanntmachung des Hinweises auf die Patenterteilung: **21.08.2024**
(21) Anmeldenummer: 23157100.1
(22) Anmeldetag: 09.12.2019
(51) Int. Cl.: F16C 33/10, F03D 80/70, F16C 17/10, F16C 35/02

(54) **GONDEL FÜR EINE WINDKRAFTANLAGE**
NACELLE FOR A WIND TURBINE
NACELLE POUR UNE ÉOLIENNE

(30) Priorität: 13.12.2018 AT 511122018
(43) Veröffentlichungstag der Anmeldung: 26.07.2023
(62) Teilanmeldung aus: 19835588.5
(73) Patentinhaber: Miba Gleitlager Austria GmbH, 4663 Laakirchen (AT)
(72) Erfinder: HÖLZL, Johannes Sebastian, 4880 Berg im Attergau (AT)
(74) Vertreter: Burger, Hannes

(56) Entgegenhaltungen:
- EP-A1- 2 600 037
- EP-A1- 2 657 519
- EP-A1- 2 863 076
- EP-A1- 3 040 553
- WO-A1-2007/071239
- WO-A1-2014/117196
- DE-A1- 3 702 008

## Beschreibung

Die Erfindung betrifft eine Gondel für eine Windkraftanlage, sowie eine mit der Gondel ausgestattete Windkraftanlage.

Aus der EP2863076A1 ist eine Rotorlagerung für eine Gondel einer Windkraftanlage bekannt. Die aus der EP2863076A1 bekannte Rotorlagerung weist eine nur geringe Energieeffizienz auf.

Eine weitere Windkraftanlage ist aus der EP 3 040 553 A1 bekannt, die die Merkmale des Oberbegriffs der Ansprüche 1 und 15 offenbart.

Aufgabe der vorliegenden Erfindung war es, die Nachteile des Standes der Technik zu überwinden und eine Gondel für eine Windkraftanlage mit verbesserter Energieeffizienz zu schaffen.

Diese Aufgabe wird durch eine Gondel und eine Windkraftanlage gemäß den Ansprüchen gelöst.

Erfindungsgemäß ist eine Gondel für eine Windkraftanlage vorgesehen. Die Gondel umfasst:
- ein Gondelgehäuse;
- eine Rotornabe;
- eine Rotorlagerung zur Lagerung der Rotornabe am Gondelgehäuse, wobei die Rotorlagerung zumindest ein inneres Ringelement und zumindest ein äußeres Ringelement aufweist, wobei zwischen dem inneren Ringelement und dem äußeren Ringelement zumindest ein ölgeschmiertes Gleitlagerelement ausgebildet ist. Im Gondelgehäuse und/oder in der Rotornabe ist ein Schmierölsumpf zur Aufnahme eines Schmieröles für das Gleitlagerelement derart ausgebildet, dass der Schmierölsumpf bis zu einem Schmierölniveau mit Schmieröl befüllbar ist, wobei zumindest ein Abschnitt der Rotorlagerung im Schmierölsumpf vertikal unterhalb des Schmierölniveaus angeordnet ist.

Die erfindungsgemäße Gondel bringt den überraschenden Vorteil mit sich, dass durch den erfindungsgemäßen Aufbau eine Verbesserung der Energieeffizienz der Gondel erreicht werden kann. Die verbesserte Energieeffizienz der Gondel kann insbesondere dadurch erreicht werden, dass Teile der Rotorlagerung in den Schmierölsumpf eintauchen und somit eine hydrodynamische Schmierung der Rotorlagerung realisiert werden kann, bei welcher keine zusätzliche Ölpumpe benötigt wird. Insbesondere sind dadurch komplexe Aggregate, wie etwa die zusätzliche Ölpumpe nicht notwendig. Auch ansonsten erforderliche Ölleitungen zum Transport von mittels einer Ölpumpe gefördertem Schmieröl sind bei der erfindungsgemäßen Gondel nicht notwendig. Dadurch kann nicht nur die Energieeffizienz verbessert werden, sondern kann auch die Komplexität der Gondel vermindert werden. Dies führt insbesondere zu einer Verminderung der Fehleranfälligkeit der Gondel bzw. zu einer Erhöhung der Lebensdauer der Gondel.

Weiters kann es zweckmäßig sein, wenn das zumindest eine Gleitlagerelement als hydrodynamisches Gleitlager ausgebildet ist, welches ohne Druckerhöhungsvorrichtung schmierbar ist.

Ferner kann vorgesehen sein, dass im inneren Ringelement und/oder im äußeren Ringelement zumindest eine Schmierölbohrung angeordnet ist, welche direkt in den Schmierölsumpf mündet. Dies bringt den Vorteil mit sich, dass das Schmieröl direkt vom Schmierölsumpf zum Gleitlagerelement zugeführt werden kann.

Darüber hinaus kann vorgesehen sein, dass zwischen dem Gondelgehäuse und der Rotornabe und/oder zwischen dem Gondelgehäuse und einer Rotorwelle ein Dichtungselement ausgebildet ist. Durch diese Maßnahme kann ein Austritt des Schmieröles aus dem Inneren der Gondel vermieden bzw. weitestgehend vermindert werden.

Vorteilhaft ist auch eine Ausprägung, gemäß welcher vorgesehen ist, dass der Schmierölsumpf zur Gänze im Gondelgehäuse ausgebildet ist, wobei das Gondelgehäuse im Bereich des Schmierölsumpfes teilbar ausgeführt ist. Dies bringt den Vorteil mit sich, dass das Dichtungselement außerhalb des Schmierölsumpfes ausgebildet sein kann und somit nur eine geringere Dichtwirkung aufweisen muss, als wenn der Schmierölsumpf bis zum Dichtungselement reicht. Durch die teilbare Ausführung des Gondelgehäuses im Bereich des Schmierölsumpfes kann die Rotorlagerung vereinfacht gewartet werden bzw. wird der Zusammenbau der Rotorlagerung erleichtert.

Gemäß einer Weiterbildung ist es möglich, dass das Gondelgehäuse einen Gehäusehauptteil und einen Schmierölsumpfdeckel aufweist. Der Schmierölsumpfdeckel kann zusammen mit dem Gehäusehauptteil den Schmierölsumpf bilden. Im zusammengebauten Zustand bildet der Schmierölsumpfdeckel einen Teil des Gehäuses. Insbesondere kann vorgesehen sein, dass der Schmierölsumpfdeckel mittels Befestigungsmittel, insbesondere mittels Schrauben, mit dem Gehäusehauptteil gekoppelt ist. Weiters kann vorgesehen sein, dass zwischen dem Gehäusehauptteil und dem Schmierölsumpfdeckel ein Dichtungselement angeordnet ist.

Weiters kann vorgesehen sein, dass der Schmierölsumpfdeckel radial geteilt ausgeführt ist, bzw. mehrere Schmierölsumpfdeckel vorgesehen sind, welche in Radialrichtung von der Rotorwelle entfernbar sind. Durch diese Maßnahme kann erreicht werden, dass der Schmierölsumpfdeckel entfernt werden kann, ohne dabei die Rotornabe von der Rotorwelle abnehmen zu müssen. Insbesondere kann dadurch die Wartungsfreundlichkeit der Gondel verbessert werden.

Ferner kann es zweckmäßig sein, wenn das innere Ringelement mit der Rotornabe gekoppelt ist und wenn das zumindest eine Gleitlagerelement am inneren Ringelement befestigt ist und relativ zum äußeren Ringelement verdrehbar ist, wobei zwischen dem Gleitlagerelement und dem äußeren Ringelement eine Gleitfläche ausgebildet ist. Insbesondere kann hierbei vorgesehen sein, dass die Rotorlagerung derart ausgebildet ist, dass die Gleitfläche zumindest abschnittsweise in den Schmierölsumpf eintaucht. Besonders ein derartiger Aufbau der Rotorlagerung bringt den überraschenden Vorteil mit sich, dass die Schmierung des Rotorlagers besonders effizient erfolgen kann und somit eine derart ausgebildete Gondel eine hohe Energieeffizienz aufweisen kann.

Darüber hinaus kann vorgesehen sein, dass im äußeren Ringelement zumindest eine Schmierölbohrung angeordnet ist, welche an einem ersten Ende in die Gleitfläche mündet und an einem zweiten Ende in den Schmierölsumpf mündet. Durch diese Maßnahme kann erreicht werden, dass das Schmieröl direkt über die Schmierölbohrung zur Gleitfläche zugeführt werden kann, was eine überraschend hohe Effizienz der Lagerung mit sich bringt.

Weiters kann vorgesehen sein, dass im äußeren Ringelement ein zumindest abschnittsweise umlaufender Strömungskanal ausgebildet ist, welcher insbesondere in Form eines Keilspaltes ausläuft und in welchen die zumindest eine Schmierölbohrung einmündet. Durch diese Maßnahme kann sich an der Gleitfläche erleichtert ein Ölfilm ausbilden und somit die Schmierung des Rotorlagers verbessert werden. Der zumindest abschnittsweise umlaufende Strömungskanal kann am inneren Ringelement mittig an jener Fläche ausgebildet sein, an der das Gleitlagerelement anliegt.

Gemäß einer besonderen Ausprägung ist es möglich, dass über den Umfang des äußeren Ringelementes verteilt mehrere Schmierölbohrungen ausgebildet sind, wobei mehrere der Schmierölbohrungen in den Strömungskanal einmünden. Durch diese Maßnahme kann sichergestellt werden, dass der Strömungskanal mit ausreichend Schmieröl versorgt werden kann.

Entsprechend einer vorteilhaften Weiterbildung kann vorgesehen sein, dass das Schmierölniveau so hoch gewählt ist, dass die Gleitflächen der Rotorlagerung an deren tiefst gelegenem Querschnitt vollständig und daher über deren gesamter Breite unterhalb des Schmierölniveaus liegen. Durch diese Maßnahme kann erreicht werden, dass die Gleitflächen der Rotorlagerung über deren gesamter Breite gesehen, mit ausreichend Schmieröl versorgt werden.

Insbesondere kann es vorteilhaft sein, wenn das Schmierölniveau so hoch gewählt ist, dass das Dichtungselement oberhalb des Schmierölniveaus liegt. Durch diese Maßnahme kann ein Schmierölaustritt aus der Gondel weitestgehend hintangehalten werden, ohne dabei überdurchschnittliche Dichtungsmaßnahmen vorsehen zu müssen.

Ferner kann vorgesehen sein, dass das Gleitlagerelement mehrere einzelne Gleitlagerpads umfasst, welche über den Umfang verteilt angeordnet sind. Besonders derartige Gleitlagerpads können einfach eingebaut werden bzw. können diese im Wartungsfall einfach ausgetauscht werden. Insbesondere kann vorgesehen sein, dass die einzelnen Gleitlagerpads im zusammengebauten Zustand eine geschlossene Gleitfläche ausbilden, sodass sich ein gleichmäßiger Schmierölfilm im Gleitlager ausbilden kann.

Darüber hinaus kann vorgesehen sein, dass die Gleitlagerpads jeweils mittels zumindest eines Befestigungsmittels, insbesondere einer Schraubverbindung am inneren Ringelement oder äu-ßeren Ringelement befestigt sind. Insbesondere bei einer derartigen Befestigung der Gleitlagerpads im Gleitlager kann die Wartungsfreundlichkeit der Rotorlagerung verbessert werden.

Vorteilhaft ist auch eine Ausprägung, gemäß welcher vorgesehen sein kann, dass im Gondelgehäuse und/oder in der Rotornabe ein Schmierölsumpf zur Aufnahme eines Schmieröles für das Gleitlagerelement ausgebildet ist, wobei der Schmierölsumpf bis zu einem Schmierölniveau mit Schmieröl befüllt ist, wobei zumindest ein Abschnitt der Rotorlagerung im Schmierölsumpf vertikal unterhalb des Schmierölniveaus angeordnet ist, sodass dieser Abschnitt der Rotorlagerung in das im Schmierölsumpf gesammelte Schmieröl eintaucht.

Erfindungsgemäß ist weiters eine Windkraftanlage mit einer Gondel vorgesehen. Die Gondel umfasst:
- ein Gondelgehäuse;
- eine Rotornabe mit daran angeordneten Rotorblättern;
- eine Rotorlagerung zur Lagerung der Rotornabe am Gondelgehäuse, wobei die Rotorlagerung zumindest ein inneres Ringelement und zumindest ein äußeres Ringelement aufweist, wobei zwischen dem inneren Ringelement und dem äußeren Ringelement zumindest ein Gleitlagerelement ausgebildet ist.

Im Gondelgehäuse und/oder in der Rotornabe ist ein Schmierölsumpf zur Aufnahme eines Schmieröles für das Gleitlagerelement ausgebildet, wobei der Schmierölsumpf bis zu einem Schmierölniveau mit Schmieröl befüllt ist, wobei zumindest ein Abschnitt der Rotorlagerung im Schmierölsumpf vertikal unterhalb des Schmierölniveaus angeordnet ist, sodass dieser Abschnitt der Rotorlagerung in das im Schmierölsumpf gesammelte Schmieröl eintaucht.

Weiters kann vorgesehen sein, dass das Gleitlagerelement als Mehrschichtgleitlager ausgebildet ist. Das Mehrschichtgleitlager kann aus zumindest einer Stützschicht und zumindest einer Gleitschicht bestehen bzw. diese aufweisen, wobei die Gleitschicht eine Härte nach Vickers von zumindest 75 HV (0,001), insbesondere zumindest 110 HV (0,001), zumindest im Oberflächenbereich einer Lauffläche aufweist. Durch die Ausbildung der Gleitschicht mit einer bestimmten Mindesthärte, zumindest im Oberflächenbereich, kann der Verschleiß als die Lebensdauer limitierender Faktor des Gleitlagers verringert werden. Anders als bei herkömmlichen Gleitlagersystemen für Windkraftanlagen, bei denen davon ausgegangen wird, dass ein weicher Lagerwerkstoff eingesetzt werden muss, um mit der Mischreibung und der elastischen Verformung während des Betriebes der Windkraftanlage zurecht zu kommen, was zu entsprechenden großen Dimensionen und hydrodynamischen Verlusten führt, hat sich gezeigt, dass für die erfindungsgemäße Anwendung eines Mehrschichtgleitlagers es von Vorteil ist, wenn entsprechend harte Oberflächenwerkstoffe verwendet werden.

Insbesondere kann vorgesehen sein, dass die Gleitfläche des Gleitlagerelementes und die Dichtfläche der Dichtung einen ähnlichen Aufbau aufweisen.

Vorzugsweise umfasst die Gleitfläche des Gleitlagerelementes und/oder die Dichtfläche einen Werkstoff der ausgewählt ist aus einer Gruppe umfassend Aluminiumbasislegierungen, Bismutbasislegierungen, Silberbasislegierungen, Gleitlacke. Insbesondere diese verschleißresistenten und tribologisch besonders wirksamen Werkstoffe haben sich in Windkraftanlagen mit hoher Leistungsdichte als besonders vorteilhaft herausgestellt. Überraschenderweise sind besonders Gleitlacke als Gleitschicht gut einsetzbar, obwohl diese eine Härte nach Vickers von ca. 25 HV (0,001) bis 60 HV (0,001) aufweisen, also deutlich weicher sind, als voranstehend beschriebene Gleitschichten, wobei hier eine Steigerung der Härte durch Zugabe von entsprechenden Hartpartikeln möglich ist.

Es besteht weiters die Möglichkeit, dass auf der Gleitfläche des Gleitlagerelementes und/oder der Dichtfläche eine polymerbasierte Einlaufschicht angeordnet ist, um damit eine bessere Anpassungsfähigkeit der Dichtfläche an das Dichtungselement während des Einlaufens des Dichtungselementes zu erreichen.

Als Gleitlacke können zum Beispiel verwendet werden Polytetrafluorethylen, fluorhältige Harze, wie z.B. Perfluoralkoxy-Copolymere, Polyfluoralkoxy-Polytetrafluorethylen-Copolymere, Ethylentetrafluorethylen, Polychlortrifluorethylen, fluorierte Ethylen-Propylen Copolymere, Polyvinylfluorid, Polyvinylidenfluorid, alternierende Copolymere, statistische Copolymere, wie z.B. Perfluorethylenpropylen, Polyesterimide, Bismaleimide, Polyimidharze, wie z.B. Carboranimide, aromatische Polyimidharze, wasserstofffreie Polyimidharze, Poly-triazo-Pyromellithimide, Polyamidimide, insbesondere aromatische, Polyaryletherimide, gegebenenfalls modifiziert mit Isocyanaten, Polyetherimide, gegebenenfalls modifiziert mit Isocyanaten,Epoxyharze, Epoxyharzester, Phenolharze, Polyamid 6, Polyamid 66, Polyoxymethylen, Silikone, Polyarylether, Polyarylketone, Polyaryletherketone, Polyarylether-etherketone, Polyetheretherketone, Polyetherketone, Polyvinylidendiflouride, Polyethylensulfide, Allylensulfid, Poly-triazo-Pyromellithimide, Polyesterimide, Polyarylsulfide, Polyvinylensulfide, Polyphenylensulfide, Polysulfone, Polyethersulfone, Polyarylsulfone, Polyaryloxide, Polyarylsulfide, sowie Copolymere daraus.

Weiters kann vorgesehen sein, dass das Gleitlagerelement an dessen Gleitfläche eine eine Polymerschicht umfasst, wobei die Polymerschicht Festschmierstoffpartikel und Metalloxidpartikel und als Polymer ausschließlich ein Polyimidpolymer oder ein Polyamidimidpolymer oder eine Mischung daraus aufweist, wobei die Metalloxidpartikel ausgewählt sind aus einer Gruppe umfassend Bismutvanadate, Chrom-Antimon-Rutile und Mischungen daraus. Es hat sich überraschend herausgestellt, dass Polymere mit Imidgruppen als eines der wesentlichen Strukturmerkmale, eine nicht vorhersehbare Verbesserung in Hinblick auf den Verschleiß sowie die Verringerung der Ausbruchneigung zeigt, wenn als Metalloxidpartikel ein Bismutvanadat oder ein Chrom-Antimon-Rutil oder eine Mischung daraus eingesetzt werden. Es wird vermutet, dass dies darauf zurückzuführen ist, dass durch die Reaktivität der Imidgruppen aufgrund der beiden, dem Stickstoffatom benachbarten Sauerstoffatome des die Matrix der Polymerschicht bildenden Polymers, und der damit bewirkten Ladungsverschiebung in der Polymerkette die Einbindung des Bismutvanadats bzw. des Chrom-Antimon-Rutils über deren anionische bzw. kationische Ladungsträger verbessert ist, wodurch die Polymermatrix in einem nicht erwarteten Umfang verstärkt wird. Es ist damit nicht nur die Ausbildung einer Einlaufschicht, wie diese aus dem Stand der Technik bekannt ist, möglich, sondern kann damit die im normalen Betrieb des Gleitlagerelementes nach dem Einlauf mit dem jeweiligen Gleitpartner in Kontakt stehende Gleitschicht an sich aus der Polymerschicht auch für spezielle, hoch belastete Anwendungen eines Gleitlagerelementes hergestellt werden. Insbesondere können durch die obig beschriebene Ausbildung überraschend gute Trockenlaufeigenschaften erreicht werden, welche bei Hydrodynamischen Gleitlagern zur Erhaltung einer langen Lebensdauer unerlässlich sind.

Gemäß einer Ausführungsvariante der Gleitlagerelementes ist bevorzugt vorgesehen, dass die Metalloxidpartikel in einem Gesamtanteil in der Polymerschicht enthalten sind, der ausgewählt ist aus einem Bereich von 2 Gew.-% bis 13 Gew.-%. Es hat sich im Zuge der durchgeführten Tests herausgestellt, dass zwar mit einem Anteil von weniger als 2 Gew.-% an diesen Metalloxidpartikeln eine Verbesserung der tribologischen Eigenschaften der Polymerschicht beobachtet werden kann, allerdings kann die Dauerbelastbarkeit der Polymerschicht ab einem Anteil von 2 Gew.-% deutlich verbessert werden, wodurch Polymerschichten mit diesen Mindestanteilen an Metalloxidpartikeln eine bessere Eignung zur Verwendung als Gleitschicht eines Gleitlagers aufweisen. Andererseits nimmt bei einem Anteil von mehr als 13 Gew.-% die Tragfähigkeit der Polymerschicht in einem Ausmaß ab, das die Verwendung der Polymerschicht als Gleitschicht negativ beeinflusst.

Weiter kann vorgesehen sein, dass das Bismutvanadat oxidische Beimengungen von Wolfram und/oder Molybdän enthält. Beide Metalle finden sich auch in typischen Festschmierstoffen, wie MoS2 oder WS2, die bekanntermaßen in derartigen Polymerschichten in Gleitlagern eingesetzt werden. Es kann damit nicht nur die Einbindung der Metalloxidpartikel in die Polymermatrix verbessert werden, sondern kann damit auch die Materialverträglichkeit in Hinblick auf die eingesetzten Festschmierstoffpartikel verbessert werden. Darüber hinaus kann damit aber auch die Schmierfähigkeit der Polymerschicht insofern verbessert werden, als aus diesen Beimengungen selbst mit den sulfidischen Bestandteilen des Schmieröls bei den erhöhten Temperaturen im Betrieb des Gleitlagerelementes gegebenenfalls wiederum Festschmierstoffpartikel gebildet werden können.

Gemäß einer weiteren Ausführungsvariante dazu kann vorgesehen sein, dass der Gesamtanteil an Wolframoxid(en) und/oder Molybdänoxid(en) an dem Bismutvanadat ausgewählt ist aus einem Bereich von 5 Gew.-% bis 20 Gew.-%. Bei einem Anteil von weniger als 5 Gew.-% konnte zwar eine gewisse Verbesserung der tribologischen Eigenschaften der Polymerschicht erreicht werden, allerdings in einem Ausmaß, das den Einsatz an Bismutvanadat mit diesen Beimengungen wirtschaftlich nicht rechtfertigen kann. Bei einem Anteil von mehr als 20 Gew.-% konnte keine weitere Verbesserung der tribologischen Eigenschaften der Polymerschicht beobachtet werden.

Der Anteil an Antimonoxid(en) an dem Chrom-Antimon-Rutil ist vorzugsweise ausgewählt aus einem Bereich von 5 Gew.-% bis 14 Gew.-%. Der Einsatz von Antimonoxiden zur Stärkung der Polymermatrix ist aus dem Stand der Technik bekannt. Als Beimengung zum Rutil bewirken die Antimonionen eine Ladungsverzerrung innerhalb der Rutilstruktur, wodurch die Einbindung der Metalloxidpartikel in die Polymermatrix verbessert werden kann. Bei Mengenanteilen an Antimonoxid(en) an dem Chrom-Antimon-Rutil außerhalb des genannten Bereichs konnte entweder nur eine geringfügige Verbesserung der tribologischen Eigenschaften der Polymerschicht im Vergleich zu Polymerschichten mit reinem Ti02 beobachtet werden (bei geringeren Anteilen), oder die Polymerschicht wurde zu hart (bei höheren Anteilen).

Es kann weiter vorgesehen sein, dass der Anteil an Chromoxid(en) an dem Chrom-Antimon-Rutil ausgewählt ist aus einem Bereich von 1 Gew.-% bis 8 Gew.-%. Der Einsatz von Chromoxiden zur Stärkung der Polymermatrix ist ebenfalls aus dem Stand der Technik bekannt. Als oxidische Beimengung zu Rutil wird aber überraschenderweise eine deutliche Verbesserung dieses Effektes beobachtet, der über jenen hinausgeht, der durch die Zugabe von Chromoxiden allein zu erwarten wäre. Es wird vermutet, dass diese Steigerung des Effektes ebenfalls auf die bessere Einbindung der oxidischen Beimengungen von Chrom in die Polymermatrix zurückgeht, wodurch die Stärkung der Polymermatrix unmittelbarer auf die Polymerketten wirkt. Ebenso wie voranstehend zu Molybdän und Wolfram beschrieben, wird zwar unterhalb von 1 Gew.-% der Effekt der oxidischen Beimengungen an Chrom beobachtet, allerdings in einem Ausmaß, das den Zusatz von reinem Rutil ohne die oxidischen Beimengungen an Chrom favorisiert. Bei einem Anteil von mehr als 8 Gew.-% an diesen Beimengungen wird die Polymermatrix zu hart, worunter die gesamte Tribologie des Gleitlagerelementes leidet.

Vorzugsweise nehmen die Sb5+-Ionen und die Cr2+-Ionen zu mehr als 50 Atom-% des Gesamtanteils an Chrom und Antimon in dem Chrom-Antimon-Rutil die Gitterplätze von Ti3+ ein und ersetzen dieses somit teilweise. Bekanntlich weist die idealisierte Rutilstruktur ausschließlich oktaedrisch koordinierte Titanatome auf. Diese idealisierte Struktur ist gekennzeichnet durch Ti4+-Ionen und O2-Ionen. In der realen Struktur von Rutil kommen aber auch Ti3+ und Ti5+ vor, beispielsweise infolge von Oberflächendefekten. Von Vorteil, dass dabei mehr als 50 Atom-% der Ti3+ Plätze von Chrom und Antimon eingenommen werden, ist, dass an solchen Gitterplätzen offenbar eine verbesserte Anbindung des Chrom-Antimon-Rutils an die Polymerstruktur erfolgen kann.

Es kann weiter vorgesehen sein, dass das Antimon und das Chrom in dem Chrom-Antimon-Rutil in einem Verhältnis zueinander vorliegen, das ausgewählt ist aus einem Bereich von 1,5 : 1 bis 3 : 1. Der genaue Mechanismus der Wirkung ist noch nicht vollständig geklärt. In Versuchen hat sich dieses Mischungsverhältnis jedoch als besonders vorteilhaft gezeigt.

Nach einer anderen Ausführungsvariante des Gleitlagerelementes kann vorgesehen sein, dass ein Anteil von zumindest 60 % der Metalloxidpartikel - bezogen auf den Gesamtanteil der Metalloxidpartikel in der Polymerschicht - eine maximale Partikelgröße von höchstens 500 nm aufweist. Obwohl es möglich ist, die Metalloxidpartikel zur Verstärkung der Polymermatrix mit einer auf dem gegenständlichen technischen Gebiet herkömmlichen Partikelgröße einzusetzen, wurde gefunden, dass der Einsatz von Metalloxidpartikeln mit einer maximalen Partikelgröße von 500 nm den Vorteil hat, dass diese in ihrem Umfeld die Ausrichtung der Polymerketten und dadurch die Struktur des Polymers selbst beeinflussen. Die Metalloxidpartikel weisen also neben ihrer direkten Wirkung zur Verstärkung der Polymermatrix auch eine indirekte Wirkung auf die Struktur des Polymers auf. Dadurch kann die Festigkeit des Polymers gezielt verändert werden.

Es kann weiter vorgesehen werden, dass zumindest ein Teil der Metalloxidpartikel und/oder der Festschmierstoffpartikel eine Oberflächenmodifizierung aufweisen. Durch diese Oberflächenmodifizierung kann die Wechselwirkung der Partikel mit der Polymermatrix, und damit deren Wirkung innerhalb der Polymerschicht, beeinflusst und über weite Bereiche eingestellt werden.

Vorzugsweise ist dabei die Oberflächenmodifizierung ausgewählt aus einer Gruppe umfassend Silanisierungen, Siloxanisierungen, Epoxidierung, Aminierungen, Plasmaaktivierungen, Elektronenstrahl-Aktivierung. Insbesondere die durch diese Reaktionen auf der Oberfläche der Partikel erzeugten funktionellen Gruppen bzw. Liganden haben den Vorteil, dass damit die Partikel einfacher ohne Agglomeratbildung der Ausgangsstoffe zur Herstellung der Polymerschicht beigemischt werden können, wodurch die zumindest annähernd homogene Verteilung der Partikel in der Mischung und damit in der Folge in der Polymerschicht verbessert werden kann. Durch diese zumindest annähernd homogene Verteilung der Partikel kann deren Effekt in der Polymerschicht vergleichmäßigt werden. Zudem kann damit aber auch die Anbindung der Partikel an die Polymermatrix verbessert werden.

Bevorzugt besteht die Polymerschicht gemäß einer Ausführungsvariante des Gleitlagerelementes ausschließlich aus Polyamidimid, Festschmierstoffpartikel und den Metalloxidpartikeln, wodurch die Herstellung der Polymerschicht vereinfacht werden kann. Darüber hinaus können gegebenenfalls auftretende Wechselwirkungen der, der Vorstufe des Polymers zugesetzten Inhaltsstoffe der Polymerschicht miteinander reduziert werden, wodurch die Effektivität der Inhaltsstoffe in Richtung auf den zu lagernden Gleitpartner verbessert werden kann.

In Hinblick auf die Stärkung der Polymermatrix hat es sich weiter als vorteilhaft herausgestellt, wenn der Anteil an Festschmierstoffpartikel zum Anteil an Metalloxidpartikel ausgewählt ist aus einem Bereich von 5:1 bis 12:1.

In der bevorzugten Ausführungsvariante der Polymerschicht ist diese als Gleitschicht ausgebildet, sodass also das Lagerelement keine weitere, metallische Gleitschicht benötigt und dieses daher einfacher aufgebaut werden kann.

Weiters kann es zweckmäßig sein, wenn das Dichtungselement als Axialdichtung ausgebildet ist, welche zwischen einer Stirnseite des Gondelgehäuses und einer Stirnseite der Rotornabe angeordnet ist.

In einer Alternative kann vorgesehen sein, dass das Dichtungselement als Radialdichtung ausgebildet ist, welche zwischen dem Gondelgehäuse und der Rotornabe und/oder zwischen dem Gondelgehäuse und der Rotorwelle angeordnet ist.

Darüber hinaus kann vorgesehen sein, dass das Dichtungselement als Gleitringdichtung ausgebildet ist. Besonders mittels einer Gleitringdichtung kann eine gute Abdichtwirkung zur Abdichtung der Gondel erreicht werden.

Vorteilhaft ist auch eine Ausprägung, gemäß welcher vorgesehen sein kann, dass das Dichtungselement zumindest zwei Segmente umfasst, welche in radialer Richtung über die Rotorwelle stülpbar sind. Dies bringt den Vorteil mit sich, dass das Dichtungselement einfach gewechselt werden kann, ohne dass die Rotorwelle ausgebaut werden muss. Diese Erleichterung in der Wartung der Rotorwelle kann insbesondere dadurch erreicht werden, dass das Dichtungselement nicht vollumfänglich geschlossen ist, sondern einen segmentierten Aufbau aufweist, und somit geöffnet werden kann, um dieses radial über die Welle stülpen zu können.

Gemäß einer Weiterbildung ist es möglich, dass das Dichtungselement als Labyrinth-Dichtung ausgebildet ist. Besonders eine Labyrinthdichtung kann im vorliegenden Einsatzfall eine lange Lebensdauer aufweisen und besonders dann, wenn das Dichtungselement nicht in den Schmierölsumpf eintaucht, auch eine ausreichende Dichtwirkung aufweisen.

Ferner kann es zweckmäßig sein, wenn die Labyrinth-Dichtung einen Rücklauf aufweist, welcher in einen Schmierölsumpf führt. Durch diese Maßnahme kann ein unerwünschter Schmiermittelaustritt aus der Gondel weitestgehend vermieden werden. Der Rücklauf kann beispielsweise in Form einer Bohrung realisiert sein, welche von einer Senke des Dichtlabyrinthes in Richtung zum Schmierölsumpf führt. Der Rücklauf kann jedoch auch dadurch gebildet sein, dass eine dem Schmierölsumpf näherliegende Innenwandung am Labyrinth niedriger ist als eine zum Schmierölsumpf weiter entfernt liegende Außenwandung am Labyrinth.

Darüber hinaus kann vorgesehen sein, dass das Dichtungselement im Gondelgehäuse aufgenommen ist und die Rotornabe relativ zum Dichtungselement verdrehbar ist. Besonders eine derart ausgebildete Dichtung bzw. derart ausgebildete Einbausituation der Dichtung führt zu einem möglichst geringen Verschleiß des Dichtungselementes. Dadurch kann die Langlebigkeit des Dichtungselementes erhöht werden.

Weiters kann vorgesehen sein, dass das Dichtungselement eine Dichtfläche kontaktiert, welche relativ zum Dichtungselement bewegbar ist, wobei die Dichtfläche eine Gleitlackbeschichtung aufweist. Besonders bei einem derartigen Aufbau des Dichtungselementes kann die Langlebigkeit der Windkraftanlage erhöht werden.

Gemäß einer besonderen Ausprägung ist es möglich, dass an der Rotornabe oder an der Rotorwelle eine Gleithülse angeordnet ist, welche mit dem Dichtungselement zusammenwirkt. Besonders bei Verwendung einer Gleithülse kann die Langlebigkeit des Dichtungselementes erhöht werden.

Entsprechend einer vorteilhaften Weiterbildung kann vorgesehen sein, dass an der Rotorwelle ein Ölabtropfelement in Form einer Einstechnut oder einer Erhebung ausgebildet ist. Durch diese Maßnahmen kann erreicht werden, dass die Dichtwirkung des Dichtungselementes verbessert werden kann.

Insbesondere kann es vorteilhaft sein, wenn axial zueinander beabstandet zwei Dichtungselemente ausgebildet sind. Somit kann in Axialrichtung der Rotationsachse gesehen, der Schmierölsumpf zu beiden Richtungen abgedichtet werden, um an einer Seite einen Austritt von Schmieröl aus der Gondel zu verhindern und an einer zweiten Seite das Schmieröl im Gondelgehäuse im Bereich des Schmierölsumpfes zu binden.

Ferner kann vorgesehen sein, dass zwischen dem Gondelgehäuse und der Rotornabe und/oder zwischen dem Gondelgehäuse und einer Rotorwelle ein Dichtungselement ausgebildet ist.

Eine Druckerhöhungsvorrichtung im Sinne dieses Dokumentes ist eine Vorrichtung die dazu ausgebildet ist, durch externe Energiezuführung den Druck des Schmieröles zu erhöhen. Eine derartige Druckerhöhungsvorrichtung ist beispielsweise eine Hydraulikpumpe.

Eine Gondel im Sinne dieses Dokumentes umfasst neben einem Gondelgehäuse auch eine Rotornabe und eine Rotorlagerung zur Lagerung der Rotornabe.

Das innere Ringelement bzw. das äußere Ringelement können jeweils als eigenständige Bauteile ausgebildet sein, welche mit der Rotornabe oder Rotorwelle bzw. mit dem Gondelgehäuse gekoppelt sein können. Alternativ dazu ist es auch denkbar, dass das innere Ringelement als integraler Bestandteil der Rotornabe bzw. der Rotorwelle ausgebildet ist. Alternativ dazu ist es auch denkbar, dass das äußere Ringelement als integraler Bestandteil der Rotornabe bzw. der Rotorwelle ausgebildet ist. Alternativ dazu ist es auch denkbar, dass das innere Ringelement als integraler Bestandteil des Gondelgehäuses ausgebildet ist. Alternativ dazu ist es auch denkbar, dass das äußere Ringelement als integraler Bestandteil des Gondelgehäuses ausgebildet ist.

Zum besseren Verständnis der Erfindung wird diese anhand der nachfolgenden Figuren näher erläutert.

Es zeigen jeweils in stark vereinfachter, schematischer Darstellung:
- Fig. 1: eine schematische Darstellung einer Windkraftanlage;
- Fig. 2: ein Querschnitt einer Gondel in einer stark schematischen Darstellung;
- Fig. 3: ein Querschnitt der Gondel mit Strömungskanal im äußeren Ringelement;
- Fig. 4: eine Schnittansicht des äußeren Ringelementes mit Strömungskanal;
- Fig. 5: ein Querschnitt einer Gondel mit geteiltem Gondelgehäuse in einer stark schematischen Darstellung;
- Fig. 6: ein Ausführungsbeispiel einer Schleifringdichtung mit an einer Hülse ausgebildeter Gleitfläche;
- Fig. 7: ein Ausführungsbeispiel einer Labyrinthdichtung mit Ölablauf.

Einführend sei festgehalten, dass in den unterschiedlich beschriebenen Ausführungsformen gleiche Teile mit gleichen Bezugszeichen bzw. gleichen Bauteilbezeichnungen versehen werden, wobei die in der gesamten Beschreibung enthaltenen Offenbarungen sinngemäß auf gleiche Teile mit gleichen Bezugszeichen bzw. gleichen Bauteilbezeichnungen übertragen werden können. Auch sind die in der Beschreibung gewählten Lageangaben, wie z.B. oben, unten, seitlich usw. auf die unmittelbar beschriebene sowie dargestellte Figur bezogen und sind diese Lageangaben bei einer Lageänderung sinngemäß auf die neue Lage zu übertragen.

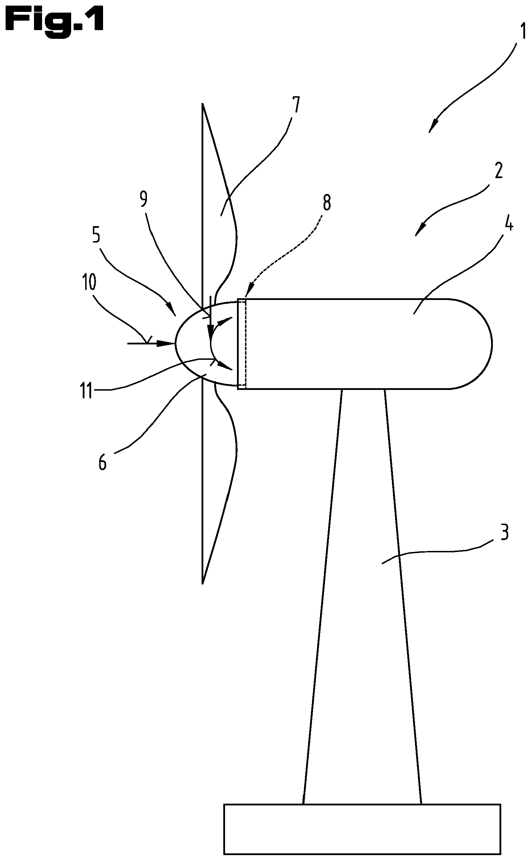

Fig. 1 zeigt eine schematische Darstellung einer Windkraftanlage 1 zum Erzeugen von elektrischer Energie aus Windenergie. Die Windkraftanlage 1 umfasst eine Gondel 2, welche an einem Turm 3 drehbar aufgenommen ist. Die Gondel 2 umfasst ein Gondelgehäuse 4, welches die Hauptstruktur der Gondel 2 bildet. Im Gondelgehäuse 4 der Gondel 2 sind die elektrotechnischen Komponenten wie etwa ein Generator der Windkraftanlage 1 angeordnet.

Weiters ist ein Rotor 5 ausgebildet, welcher eine Rotornabe 6 mit daran angeordneten Rotorblättern 7 aufweist. Die Rotornabe 6 wird als Teil der Gondel 2 gesehen. Die Rotornabe 6 ist mittels einer Rotorlagerung 8 drehbeweglich am Gondelgehäuse 4 aufgenommen.

Die Rotorlagerung 8, welche zur Lagerung der Rotornabe 6 am Gondelgehäuse 4 der Gondel 2 dient, ist zur Aufnahme einer Radialkraft 9, einer Axialkraft 10 und eines Kippmomentes 11 ausgebildet. Die Axialkraft 10 ist bedingt durch die Kraft des Windes. Die Radialkraft 9 ist bedingt durch die Gewichtskraft des Rotors 5 und greift am Schwerpunkt des Rotors 5 an. Da der Schwerpunkt des Rotors 5 außerhalb der Rotorlagerung 8 liegt, wird in der Rotorlagerung 8 durch die Radialkraft 9 das Kippmoment 11 hervorgerufen. Das Kippmoment 11 kann ebenfalls durch eine ungleichmäßige Belastung der Rotorblätter 7 hervorgerufen werden.

Die erfindungsgemäße Rotorlagerung 8 kann beispielsweise einen Durchmesser zwischen 0,5 m und 5 m aufweisen. Natürlich ist es auch denkbar, dass die Rotorlagerung 8 kleiner oder größer ist.

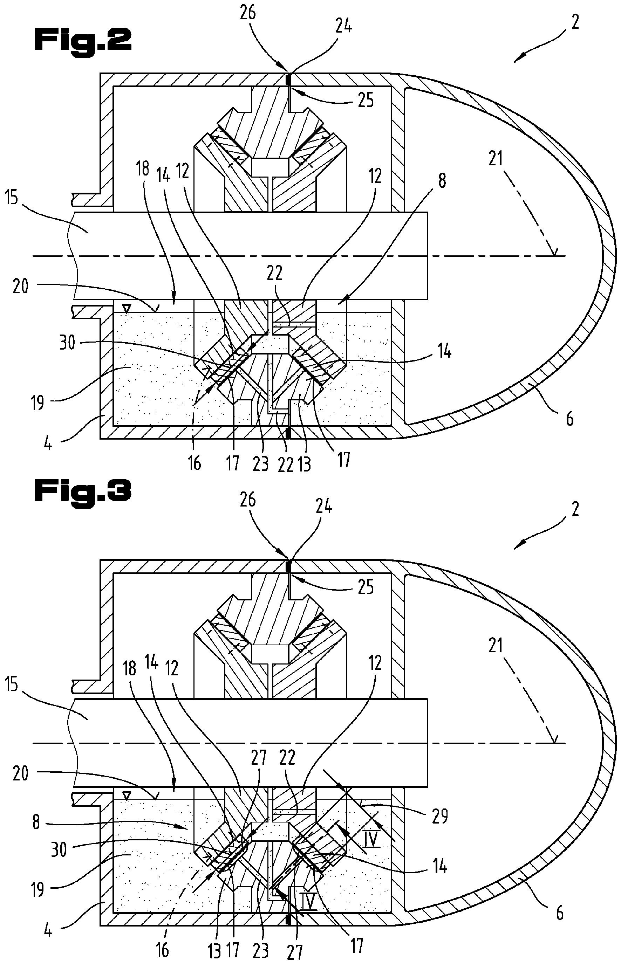

In Fig. 2 ist das Gondelgehäuse 4 und die Rotornabe 6 in einer schematischen Schnittdarstellung dargestellt, wobei der Aufbau, insbesondere in dessen Dimensionierung stark schematisiert wurde. Wie aus Fig. 2 ersichtlich, kann vorgesehen sein, dass die Rotorlagerung 8 zumindest ein inneres Ringelement 12 und zumindest ein äußeres Ringelement 13 aufweist. Zwischen dem inneren Ringelement 12 und dem äußeren Ringelement 13 ist zumindest ein Gleitlagerelement 14 angeordnet.

Wie aus Fig. 2 ersichtlich, kann vorgesehen sein, dass das innere Ringelement 12 mit der Rotornabe 6 gekoppelt ist. Insbesondere kann vorgesehen sein, dass eine Rotorwelle 15 ausgebildet ist, an welcher die Rotornabe 6 angeordnet ist. Das innere Ringelement 12 kann direkt an der Rotorwelle 15 aufgenommen sein.

In einem weiteren, nicht dargestellten Ausführungsbeispiel kann natürlich auch vorgesehen sein, dass das innere Ringelement 12 direkt an der Rotornabe 6 aufgenommen ist.

In wieder einem weiteren, nicht dargestellten Ausführungsbeispiel kann natürlich auch vorgesehen sein, dass das innere Ringelement 12 am Gondelgehäuse 4 befestigt ist, und dass die Rotornabe 6 mit dem äußeren Ringelement 13 gekoppelt ist.

Wie aus Fig. 2 ersichtlich, kann vorgesehen sein, dass sowohl das innere Ringelement 12 als auch das äußere Ringelement 13 V-förmig ausgebildet sind und jeweils an der V-förmigen Flanke zwischen den beiden Ringelementen 12, 13 axial zueinander beabstandet zwei Gleitlagerelemente 14 ausgebildet sind, welche in einem Winkel zueinander angeordnet sind. Wie aus Fig. 2 ersichtlich, kann in einem Ausführungsbeispiel vorgesehen sein, dass die Gleitlagerelemente 14 mittels Befestigungsmittel 16 am inneren Ringelement 12 befestigt sind. Somit kann zwischen den Gleitlagerelementen 14 und dem äußeren Ringelement 13 eine Gleitfläche 17 ausgebildet sein. Bei einer Anordnung der Gleitlagerelemente 14, wie sie in Fig. 2 dargestellt ist, können die Gleitflächen 17 ebenfalls V-förmig angeordnet sein.

Wie aus Fig. 2 ebenfalls ersichtlich, kann vorgesehen sein, dass das innere Ringelement 12 bezüglich dessen axialer Erstreckung geteilt ausgeführt ist um den Zusammenbau der Rotorlagerung 8 zu erleichtern.

In einem nicht dargestellten Ausführungsbeispiel ist es natürlich auch denkbar, dass das innere Ringelement 12 nicht wie im in Fig. 2 dargestellten Ausführungsbeispiel eine Nut bildet, sondern die V-Förmige Anordnung umgekehrt ausgebildet ist, sodass am inneren Ringelement 12 ein V-Förmiger Vorsprung ausgebildet ist. In diesem Fall kann zum leichteren Zusammenbau vorgesehen sein, dass das äußeren Ringelement 13 in dessen axialer Erstreckung geteilt ausgeführt ist.

Sowohl bei einer Ausführung mit in axialer Erstreckung geteiltem inneren Ringelement 12, als auch bei einer Ausführung mit in axialer Erstreckung geteiltem äußeren Ringelement 13 kann vorgesehen sein, dass die Einzelteile des jeweils geteilt ausgeführten Ringelementes 12, 13 axial zueinander verstellbar ausgebildet sind, um beispielsweise den Verschleiß der Gleitlagerelemente 14 kompensieren zu können. Insbesondere kann vorgesehen sein, dass durch die axiale Verstellbarkeit der Einzelteile der Ringelemente 12, 13 zueinander der Lagerspalt eingestellt werden kann.

Wie aus Fig. 2 weiters ersichtlich, ist vorgesehen, dass ein Schmierölsumpf 18 ausgebildet ist, welcher zur Aufnahme von Schmieröl 19 dient. Im Betriebszustand wird der Schmierölsumpf 18 bis zu einem Schmierölniveau 20 mit Schmieröl 19 befüllt. Das Schmierölniveau 20 ist hierbei so gewählt, dass die Gleitflächen 17 zumindest abschnittsweise unterhalb des Schmierölniveaus 20 liegen und somit in das im Schmierölsumpf 18 befindliche Schmieröl 19 eintauchen.

Die Gleitlagerelemente 14 sind als hydrodynamische Gleitlager ausgebildet, wodurch sich bei Drehung der Rotornabe 6 um eine Rotorachse 21 ein Schmierölfilm an der Gleitfläche 17 ausbildet, welcher zur hydrodynamischen Lagerung des Gleitlagerelementes 14 dient.

Zur Zuführung von Schmieröl 19 zur Gleitfläche 17 kann vorgesehen sein, dass im inneren Ringelement 12 bzw. im äußeren Ringelement 13 Schmierölbohrungen 22 ausgebildet sind, welche je nach Rotationsstellung der Rotornabe 6 an einem ersten Längsende in den Schmierölsumpf 18 einmünden und an deren zweiten Längsende in einen Zwischenraum zwischen dem inneren Ringelement 12 und dem äußeren Ringelement 13 einmünden. Durch diese Maßnahme kann erreicht werden, dass ausreichend Schmieröl 19 zum Gleitlagerelement 14 zugeführt werden kann.

Weiters können auch Schmierölbohrungen 23 vorgesehen sein, welche direkt in die Gleitfläche 17 münden. Mittels dieser Schmierölbohrungen 23 kann die Gleitfläche 17 direkt mit dem Schmierölsumpf 18 strömungsverbunden sein, sodass ausreichend Schmieröl 19 zur Gleitfläche 17 zugeführt werden kann. Insbesondere kann vorgesehen sein, dass durch die Bewegung des Gleitlagerelements 14 relativ zum äußeren Ringelement 13 Schmieröl 19 via die Schmierölbohrung 23 bzw. die Schmierölbohrung 22 in die Gleitfläche 17 gesaugt wird und dort ein Schmierölfilm zur Schmierung bzw. zur Lagerung des Gleitlagerelements 14 aufgebaut wird.

Um eine gute Schmierwirkung des Gleitlagerelements 14 zu erreichen, kann vorgesehen sein, dass wie in Fig. 2 dargestellt, zumindest ein Abschnitt der Gleitfläche 17 über dessen Breite gesehen, zur Gänze unterhalb des Schmierölniveau 20 liegt.

Weiters kann vorgesehen sein, dass ein Dichtungselement 24 ausgebildet ist, welches zur Abdichtung der Rotornabe 6 zum Gondelgehäuse 4 dient. Wie aus Fig. 2 ersichtlich, kann vorgesehen sein, dass das Dichtungselement 24 zwischen einer Stirnseite 25 des Gondelgehäuses 4 und zwischen einer Stirnseite 26 der Rotornabe 6 wirkt. Insbesondere kann vorgesehen sein, dass sich der Schmierölsumpf 18 sowohl über das Gondelgehäuse 4 als auch über die Rotornabe 6 erstreckt und somit das Dichtungselement 24 abschnittsweise unterhalb des Schmierölniveau 20 liegt.

Wie aus Fig. 2 weiters ersichtlich, kann vorgesehen sein, dass das Dichtungselement 24 im Gondelgehäuse 4 aufgenommen ist.

In der Fig. 3 ist eine weitere und gegebenenfalls für sich eigenständige Ausführungsform der Gondel 2 gezeigt, wobei wiederum für gleiche Teile gleiche Bezugszeichen bzw. Bauteilbezeichnungen wie in den vorangegangenen Figuren 1 bis 2 verwendet werden. Um unnötige Wiederholungen zu vermeiden, wird auf die detaillierte Beschreibung in den vorangegangenen Figuren 1 bis 2 hingewiesen bzw. Bezug genommen.

Wie aus Fig. 3 ersichtlich, kann vorgesehen sein, dass im äußeren Ringelement 13 ein Strömungskanal 27 ausgebildet ist, welcher mit den Schmierölbohrungen 23 strömungsverbunden ist und zur besseren Verteilung von Schmieröl 19 in der Gleitfläche 17 dient.

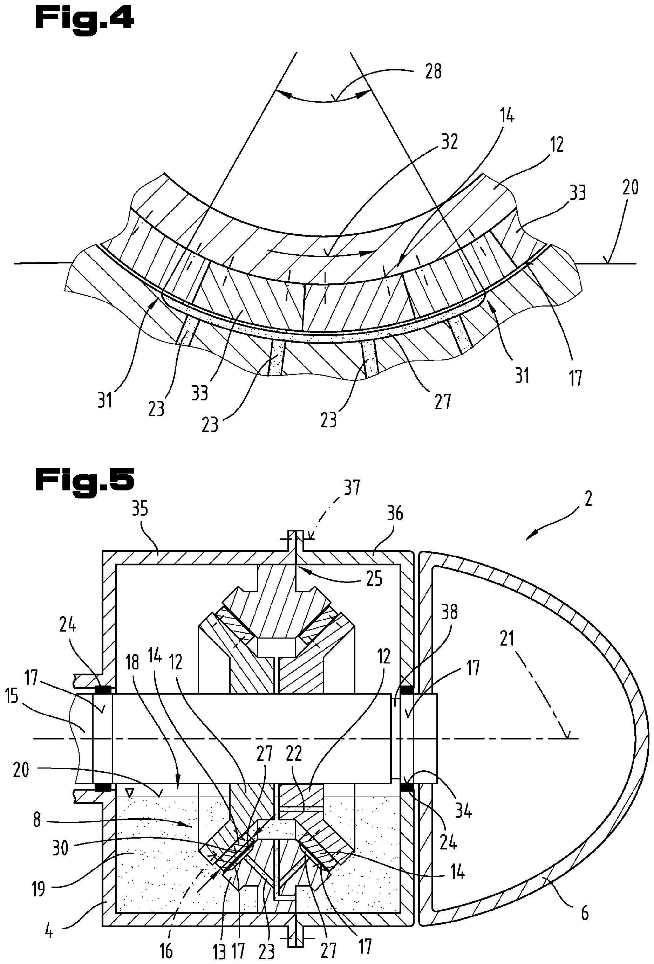

Fig. 4 zeigt eine Schnittansicht gemäß der Schnittlinie IV - IV aus Fig. 3. Wie aus Fig. 4 ersichtlich, kann vorgesehen sein, dass der Strömungskanal 27 sich über einen Strömungskanalwinkel 28 erstreckt, welcher vorzugsweise so gewählt ist, dass der Strömungskanal 27 zur Gänze unterhalb des Schmierölniveau 20 angeordnet ist. Insbesondere kann vorgesehen sein, dass der Strömungskanalwinkel 28 zwischen 10° und 160°, bevorzugt zwischen 45° und 80° beträgt.

Weiters ist vorgesehen, dass eine Strömungskanalbreite 29 so gewählt ist, dass sie kleiner ist als eine Breite 30 des Gleitlagerelements 14. Wie aus Fig. 4 ersichtlich, kann vorgesehen sein, dass mehrere der Schmierölbohrungen 23 in den Strömungskanal 27 einmünden. Weiters kann vorgesehen sein, dass der Strömungskanal 27 in Form eines Keilspaltes 31 ausläuft. Durch diese Maßnahme kann ein Schmierfilm aufgebaut werden.

In einem ersten Ausführungsbeispiel kann vorgesehen sein, dass der Strömungskanal 27 in Umfangsrichtung beidseits in Form eines Keilspaltes 31 ausläuft.

In einem weiteren Ausführungsbeispiel kann vorgesehen sein, dass in Hauptdrehrichtung 32 gesehen, nur am Ende des Strömungskanals 27 der Keilspalt 31 ausgebildet ist.

Wie aus Fig. 4 weiters ersichtlich, kann vorgesehen sein, dass das Gleitlagerelement 14 mehrere Gleitlagerpads 33 aufweist, welche über den Umfang verteilt am inneren Ringelement 12 angeordnet sind. Die Gleitlagerpads 33 können insbesondere derart am inneren Ringelement 12 angeordnet sein, dass eine durchgängige Gleitfläche 17 ausgebildet ist, welche als hydrodynamisches Lager wirken kann. Insbesondere kann vorgesehen sein, dass die Gleitfläche 17 die Form eines Kegelstumpfes aufweist.

In der Fig. 5 ist eine weitere und gegebenenfalls für sich eigenständige Ausführungsform der Gondel 2 gezeigt, wobei wiederum für gleiche Teile gleiche Bezugszeichen bzw. Bauteilbezeichnungen wie in den vorangegangenen Figuren 1 bis 4 verwendet werden. Um unnötige Wiederholungen zu vermeiden, wird auf die detaillierte Beschreibung in den vorangegangenen Figuren 1 bis 4 hingewiesen bzw. Bezug genommen.

Wie aus Fig. 5 ersichtlich, ist vorgesehen, dass der Schmierölsumpf 18 zur Gänze im Gondelgehäuse 4 ausgebildet ist. Insbesondere kann hierbei vorgesehen sein, dass die Dichtungselemente 24, insbesondere deren Dichtfläche 34, zur Gänze oberhalb des Schmierölniveau 20 liegt. Um den Zusammenbau bzw. die Wartung eines derart aufgebauten Gondelgehäuses 4 bzw. Rotorlagerung 8 zu ermöglichen bzw. zu vereinfachen, kann vorgesehen sein, dass das Gondelgehäuse 4 einen Gehäusehauptteil 35 und einen Schmierölsumpfdeckel 36 aufweist. Insbesondere kann vorgesehen sein, dass der Gehäusehauptteil 35 und der Schmierölsumpfdeckel 36 den Schmierölsumpf 18 umgrenzen. Hierbei kann vorgesehen sein, dass der Schmierölsumpfdeckel 36 mittels eines Befestigungselements 37 am Gehäusehauptteil 35 befestigt ist.

Wie aus Fig. 5 ersichtlich, kann vorgesehen sein, dass in Axialrichtung der Rotorachse 21 gesehen, beiderseits des Schmierölsumpfes 18 jeweils ein Dichtungselement 24 angeordnet ist. Insbesondere kann vorgesehen sein, dass die Dichtungselemente 24 als Radialrichtung ausgebildet sind. Eines der Dichtungselemente 24 kann hierbei im Gehäusehauptteil 35 angeordnet sein, das zweite der Dichtungselemente 24 kann im Schmierölsumpfdeckel 36 angeordnet sein.

Weiters kann vorgesehen sein, dass die Dichtungselemente 24 mit der Rotorwelle 15 zusammenwirken. Insbesondere kann hierbei vorgesehen sein, dass die Gleitfläche 17 an der Rotorwelle 15 ausgebildet ist. Insbesondere kann vorgesehen sein, dass die Rotorwelle 15 hierzu lokal eine besonders ausgebildete Oberfläche aufweist, welche beispielsweise durch eine Gleitlackbeschichtung gebildet wird. Eine derartige Gleitlackbeschichtung kann insbesondere bei der Verwendung von Schleifringdichtungen vorgesehen sein.

Weiters kann vorgesehen sein, dass an der Rotorwelle 15 ein Ölabtropfelement 38 ausgebildet ist, welches dazu dient, dass das Schmieröl 19 nicht entlang der Rotorwelle 15 in Axialrichtung zum Dichtungselement 24 gelangt. Das Ölabtropfelement 38 kann beispielsweise in Form einer Einstechnut ausgebildet sein. In einer alternativen Ausführungsvariante kann auch vorgesehen sein, dass das Ölabtropfelement 38 beispielsweise in Form einer umlaufenden Erhebung an der Rotorwelle 15 ausgebildet ist.

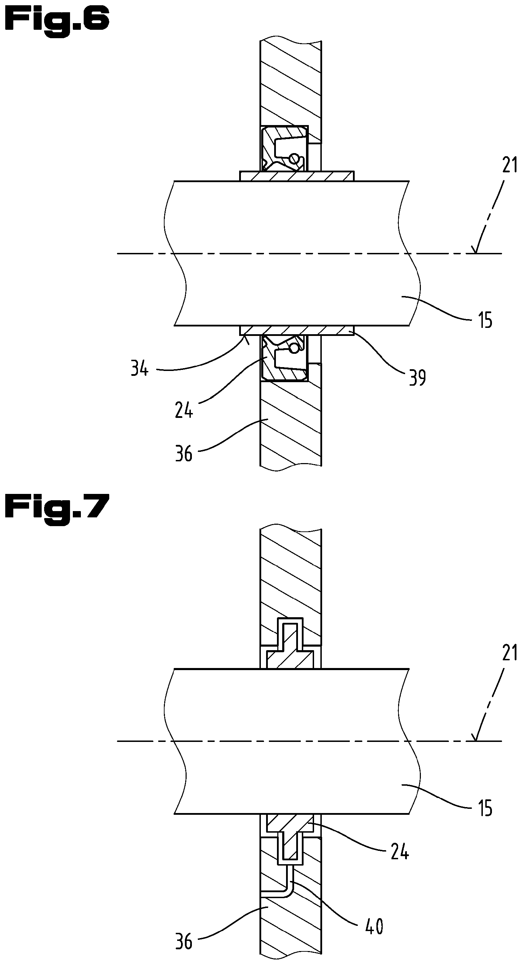

Fig. 6 zeigt in einer Detailansicht ein weiteres Ausführungsbeispiel der Anordnung des Dichtungselementes 24. Wie aus Fig. 6 ersichtlich, kann vorgesehen sein, dass an der Rotorwelle 15 eine Gleithülse 39 angeordnet ist, an welcher Gleithülse 39 die Dichtfläche 34 ausgebildet ist. Eine derartige Anordnung kann insbesondere bei der Verwendung von Schleifringdichtungen sinnvoll sein.

In einem weiteren nicht dargestellten Ausführungsbeispiel kann auch vorgesehen sein, dass die Gleithülse 39 direkt an der Rotornabe 6 aufgenommen ist und das Dichtungselement 24 somit zur Abdichtung der Rotornabe 6 dient.

Fig. 7 zeigt ein weiteres Ausführungsbeispiel des Dichtungselements 24. Wie aus Fig. 7 ersichtlich, kann vorgesehen sein, dass das Dichtungselement 24 in Form einer Labyrinthdichtung ausgebildet ist, welche beispielsweise mit dem Schmierölsumpfdeckel 36 zusammenwirkt. Insbesondere kann vorgesehen sein, dass ein Rücklauf 40 ausgebildet ist, welcher zur Rückführung von Schmieröl 19 in den Schmierölsumpf 18 dient. Der Rücklauf kann, wie in Fig. 7 ersichtlich, in Form einer Bohrung ausgebildet sein, welche vom tiefsten Punkt der Labyrinthdichtung ausgehend in den Schmierölsumpf 18 führt.

Die Ausführungsbeispiele zeigen mögliche Ausführungsvarianten, wobei an dieser Stelle bemerkt sei, dass die Erfindung nicht auf die speziell dargestellten Ausführungsvarianten derselben eingeschränkt ist, sondern vielmehr auch diverse Kombinationen der einzelnen Ausführungsvarianten untereinander möglich sind und diese Variationsmöglichkeit aufgrund der Lehre zum technischen Handeln durch gegenständliche Erfindung im Können des auf diesem technischen Gebiet tätigen Fachmannes liegt.

Der Schutzbereich ist durch die Ansprüche bestimmt. Die Beschreibung und die Zeichnungen sind jedoch zur Auslegung der Ansprüche heranzuziehen. Einzelmerkmale oder Merkmalskombinationen aus den gezeigten und beschriebenen unterschiedlichen Ausführungsbeispielen können für sich eigenständige erfinderische Lösungen darstellen. Die den eigenständigen erfinderischen Lösungen zugrundeliegende Aufgabe kann der Beschreibung entnommen werden.

Sämtliche Angaben zu Wertebereichen in gegenständlicher Beschreibung sind so zu verstehen, dass diese beliebige und alle Teilbereiche daraus mitumfassen, z.B. ist die Angabe 1 bis 10 so zu verstehen, dass sämtliche Teilbereiche, ausgehend von der unteren Grenze 1 und der oberen Grenze 10 mit umfasst sind, d.h. sämtliche Teilbereiche beginnen mit einer unteren Grenze von 1 oder größer und enden bei einer oberen Grenze von 10 oder weniger, z.B. 1 bis 1,7, oder 3,2 bis 8,1, oder 5,5 bis 10.

Der Ordnung halber sei abschließend darauf hingewiesen, dass zum besseren Verständnis des Aufbaus Elemente teilweise unmaßstäblich und/oder vergrößert und/oder verkleinert dargestellt wurden.

### Bezugszeichenaufstellung

| | | | |
|---|---|---|---|
| 1 | Windkraftanlage | 31 | Keilspalt |
| 2 | Gondel | 32 | Hauptdrehrichtung |
| 3 | Turm | 33 | Gleitlagerpad |
| 4 | Gondelgehäuse | 34 | Dichtfläche |
| 5 | Rotor | 35 | Gehäusehauptteil |
| 6 | Rotornabe | 36 | Schmierölsumpfdeckel |
| 7 | Rotorblatt | 37 | Befestigungselement |
| 8 | Rotorlagerung | 38 | Ölabtropfelement |
| 9 | Radialkraft | 39 | Gleithülse |
| 10 | Axialkraft | 40 | Rücklauf |
| 11 | Kippmoment | | |
| 12 | inneres Ringelement | | |
| 13 | äußeres Ringelement | | |
| 14 | Gleitlagerelement | | |
| 15 | Rotorwelle | | |
| 16 | Befestigungsmittel | | |
| 17 | Gleitfläche | | |
| 18 | Schmierölsumpf | | |
| 19 | Schmieröl | | |
| 20 | Schmierölniveau | | |
| 21 | Rotorachse | | |
| 22 | Schmierölbohrung Ringelement | | |
| 23 | Schmierölbohrung | | |
| 24 | Dichtungselement | | |
| 25 | Stirnseite Gondelgehäuse | | |
| 26 | Stirnseite Rotornabe | | |
| 27 | Strömungskanal | | |
| 28 | Strömungskanalwinkel | | |
| 29 | Strömungskanalbreite | | |
| 30 | Breite Gleitlagerelement | | |

## Patentansprüche

1. Gondel (2) für eine Windkraftanlage (1), die Gondel (2) umfassend:
- ein Gondelgehäuse (4);
- eine Rotornabe (6);
- eine Rotorlagerung (8) zur Lagerung der Rotornabe (6) am Gondelgehäuse (4), wobei im Gondelgehäuse (4) und/oder in der Rotornabe (6) ein Schmierölsumpf (18) zur Aufnahme eines Schmieröles (19) für das Gleitlagerelement (14) derart ausgebildet ist, dass der Schmierölsumpf (18) bis zu einem Schmierölniveau (20) mit Schmieröl (19) befüllbar ist, wobei zumindest ein Abschnitt der Rotorlagerung (8) im Schmierölsumpf (18) vertikal unterhalb des Schmierölniveaus (20) angeordnet ist, **dadurch gekennzeichnet, dass** die Rotorlagerung (8) zumindest ein inneres Ringelement (12) und zumindest ein äußeres Ringelement (13) aufweist, wobei zwischen dem inneren Ringelement (12) und dem äußeren Ringelement (13) zumindest ein ölgeschmiertes Gleitlagerelement (14) ausgebildet ist, wobei der Schmierölsumpf (18) zur Gänze im Gondelgehäuse (4) ausgebildet ist, wobei das Gondelgehäuse (4) im Bereich des Schmierölsumpfes (18) teilbar ausgeführt ist.

2. Gondel (2) nach Anspruch 1, **dadurch gekennzeichnet, dass** das zumindest eine Gleitlagerelement (14) als hydrodynamisches Gleitlager ausgebildet ist, welches ohne Druckerhöhungsvorrichtung schmierbar ist.

3. Gondel (2) nach Anspruch 1 oder 2, **dadurch gekennzeichnet, dass** im inneren Ringelement (12) und/oder im äußeren Ringelement (13) zumindest eine Schmierölbohrung (22) angeordnet ist, welche direkt in den Schmierölsumpf (18) mündet.

4. Gondel (2) nach einem der vorhergehenden Ansprüche, **dadurch gekennzeichnet, dass** zwischen dem Gondelgehäuse (4) und der Rotornabe (6) und/oder zwischen dem Gondelgehäuse (4) und einer Rotorwelle (15) ein Dichtungselement (24) ausgebildet ist.

5. Gondel (2) nach Anspruch 1, **dadurch gekennzeichnet, dass** das Gondelgehäuse (4) einen Gehäusehauptteil (35) und einen Schmierölsumpfdeckel (36) aufweist.

6. Gondel (2) nach einem der vorhergehenden Ansprüche, **dadurch gekennzeichnet, dass** das innere Ringelement (12) mit der Rotornabe (6) gekoppelt ist und dass das zumindest eine Gleitlagerelement (14) am inneren Ringelement (12) befestigt ist und relativ zum äußeren Ringelement (13) verdrehbar ist, wobei zwischen dem Gleitlagerelement (14) und dem äu-ßeren Ringelement (13) eine Gleitfläche (17) ausgebildet ist.

7. Gondel (2) nach Anspruch 6, **dadurch gekennzeichnet, dass** im äußeren Ringelement (13) zumindest eine Schmierölbohrung (23) angeordnet ist, welche an einem ersten Ende in die Gleitfläche (17) mündet und an einem zweiten Ende in den Schmierölsumpf (18) mündet.

8. Gondel (2) nach Anspruch 7, **dadurch gekennzeichnet, dass** im äußeren Ringelement (13) ein zumindest abschnittsweise umlaufender Strömungskanal (27) ausgebildet ist, welcher insbesondere in Form eines Keilspaltes (31) ausläuft und in welchen die zumindest eine Schmierölbohrung (23) einmündet.

9. Gondel (2) nach Anspruch 8, **dadurch gekennzeichnet, dass** über den Umfang des äußeren Ringelementes (13) verteilt mehrere Schmierölbohrungen (23) ausgebildet sind, wobei mehrere der Schmierölbohrungen (23) in den Strömungskanal (27) einmünden.

10. Gondel (2) nach einem der vorhergehenden Ansprüche, **dadurch gekennzeichnet, dass** das Schmierölniveau (20) so hoch gewählt ist, dass die Gleitflächen (17) der Rotorlagerung (8) an deren tiefst gelegenem Querschnitt vollständig unterhalb des Schmierölniveaus (20) liegen.

11. Gondel (2) nach einem der Ansprüche 4 bis 10, **dadurch gekennzeichnet, dass** das Schmierölniveau (20) so hoch gewählt ist, dass das Dichtungselement (24) oberhalb des Schmierölniveaus (20) liegt.

12. Gondel (2) nach einem der vorhergehenden Ansprüche, **dadurch gekennzeichnet, dass** das Gleitlagerelement (14) mehrere einzelne Gleitlagerpads (33) umfasst, welche über den Umfang verteilt angeordnet sind.

13. Gondel (2) nach Anspruch 12, **dadurch gekennzeichnet, dass** die Gleitlagerpads (33) jeweils mittels zumindest eines Befestigungsmittels (16), insbesondere einer Schraubverbindung am inneren Ringelement (12) oder äußeren Ringelement (13) befestigt sind.

14. Gondel (2) nach einem der vorhergehenden Ansprüche, **dadurch gekennzeichnet, dass** das Gleitlagerelement (14) eine Polymerschicht umfasst, wobei die Polymerschicht Festschmierstoffpartikel und Metalloxidpartikel und als Polymer ausschließlich ein Polyimidpolymer oder ein Polyamidimidpolymer oder eine Mischung daraus aufweist, wobei die Metalloxidpartikel ausgewählt sind aus einer Gruppe umfassend Bismutvanadate, Chrom-Antimon-Rutile und Mischungen daraus.

15. Windkraftanlage (1) mit einer Gondel (2), die Gondel (2) umfassend:
- ein Gondelgehäuse (4);
- eine Rotornabe (6) mit daran angeordneten Rotorblättern;
- eine Rotorlagerung (8) zur Lagerung der Rotornabe (6) am Gondelgehäuse (4), wobei im Gondelgehäuse (4) und/oder in der Rotornabe (6) ein Schmierölsumpf (18) zur Aufnahme eines Schmieröles (19) für das Gleitlagerelement (14) ausgebildet ist, wobei der Schmierölsumpf (18) bis zu einem Schmierölniveau (20) mit Schmieröl (19) befüllt ist, wobei zumindest ein Abschnitt der Rotorlagerung (8) im Schmierölsumpf (18) vertikal unterhalb des Schmierölniveaus (20) angeordnet ist, sodass dieser Abschnitt der Rotorlagerung (8) in das im Schmierölsumpf (18) gesammelte Schmieröl (19) eintaucht, **dadurch gekennzeichnet, dass** die Rotorlagerung (8) zumindest ein inneres Ringelement (12) und zumindest ein äußeres Ringelement (13) aufweist, wobei zwischen dem inneren Ringelement (12) und dem äußeren Ringelement (13) zumindest ein ölgeschmiertes Gleitlagerelement (14) ausgebildet ist, wobei der Schmierölsumpf (18) zur Gänze im Gondelgehäuse (4) ausgebildet ist, wobei das Gondelgehäuse (4) im Bereich des Schmierölsumpfes (18) teilbar ausgeführt ist.

## Claims

1. A nacelle (2) for a wind turbine (1), the nacelle (2) comprising:
- a nacelle housing (4);
- a rotor hub (6);
- a rotor bearing (8) for bearing the rotor hub (6) on the nacelle housing (4), wherein in the nacelle housing (4) and/or in the rotor hub (6), a lubricating oil sump (18) for receiving a lubricating oil (19) for the sliding bearing element (14) is formed such that the lubricating oil sump (18) can be filled with lubricating oil (19) up to a lubricating oil level (20), wherein at least a section of the rotor hub (8) is arranged in the lubricating oil sump (18) vertically below the lubricating oil level (20), **characterized in that** the rotor bearing (8) comprises at least one inner ring element (12) and at least one outer ring element (13), wherein at least one oil-lubricated sliding bearing element (14) is formed between the inner ring element (12) and the outer ring element (13), wherein the lubricating oil sump (18) is formed entirely in the nacelle housing (4), wherein the nacelle housing (4) is configured so as to be partible in the region of the lubricating oil sump (18).

2. The nacelle (2) according to claim 1, **characterized in that** the at least one sliding bearing element (14) is designed as hydrodynamic sliding bearing, which can be lubricated without a pressure-increasing device.

3. The nacelle (2) according to claim 1 or 2, **characterized in that** at least one lubricating oil bore (22) is arranged in the inner ring element (12) and/or in the outer ring element (13), which lubricating oil bore (22) opens directly into the lubricating oil sump (18).

4. The nacelle (2) according to one of the preceding claims, **characterized in that** a sealing element (24) is formed between the nacelle housing (4) and the rotor hub (6) and/or between the nacelle housing (4) and a rotor shaft (15).

5. The nacelle (2) according to claim 1, **characterized in that** the nacelle housing (4) has a main part of the housing (35) and a lubricating oil sump lid (36).

6. The nacelle (2) according to one of the preceding claims, **characterized in that** the inner ring element (12) is coupled with the rotor hub (6) and that the at least one sliding bearing element (14) is fastened to the inner ring element (12) and is rotatable relative to the outer ring element (13), wherein a sliding surface (17) is formed between the sliding bearing element (14) and the outer ring element (13).

7. The nacelle (2) according to claim 6, **characterized in that** at least one lubricating oil bore (23) is arranged in the outer ring element (13), which lubricating oil bore (23) at a first end opens into the sliding surface (17) and at a second end opens into the lubricating oil sump (18).

8. The nacelle (2) according to claim 7, **characterized in that** a flow channel (27) being circumferential at least in some sections is formed in the outer ring element (13), which flow channel (27) tapers off particularly in the shape of a wedge gap (31) and into which the at least one lubricating oil bore (23) opens.

9. The nacelle (2) according to claim 8, **characterized in that** the multiple lubricating oil bores (23) are formed to be distributed across the circumference of the outer ring element (13), wherein multiple of said lubricating oil bores (23) open into the flow channel (27).

10. The nacelle (2) according to one of the preceding claims, **characterized in that** the lubricating oil level (20) is selected at such a height, that at their lowest-situated cross-section, the sliding surfaces (17) of the rotor bearing (8) are situated entirely below the lubricating oil level (20).

11. The nacelle (2) according to one of claims 4 to 10, **characterized in that** the lubricating oil level (20) is selected at such a height that the sealing element (24) is situated above the lubricating oil level (20).

12. The nacelle (2) according to one of the preceding claims, **characterized in that** the sliding bearing element (14) comprises multiple individual sliding bearing pads (33), which are arranged so as to be distributed across the circumference.

13. The nacelle (2) according to claim 12, **characterized in that** the sliding bearing pads (33) are each fastened to the inner ring element (12) or outer ring element (13) by means of at least one fastening means (16), in particular a screw connection.

14. The nacelle (2) according to one of the preceding claims, **characterized in that** the sliding bearing element (14) comprises a polymer layer, wherein the polymer layer comprises solid lubricant particles and metal oxide particles and as a polymer only a polyimide polymer or a polyamide-imide polymer or a mixture thereof, wherein the metal oxide particles are selected from a group comprising bismuth vanadates, chromium-antimony-rutile and mixtures thereof.

15. A wind turbine (1) having a nacelle (2), the nacelle (2) comprising:
- a nacelle housing (4);
- a rotor hub (6) with rotor blades arranged thereon;
- a rotor bearing (8) for bearing the rotor hub (6) on the nacelle housing (4), wherein in the nacelle housing (4) and/or in the rotor hub (6), a lubricating oil sump (18) for receiving a lubricating oil (19) for the sliding bearing element (14) is formed, wherein the lubricating oil sump (18) is filled with lubricating oil (19) up to a lubricating oil level (20), wherein at least a section of the rotor hub (8) is arranged in the lubricating oil sump (18) vertically below the lubricating oil level (20), so that said section of the rotor bearing (8) is immersed in the lubricating oil (19) collected in the lubricating oil sump (18), **characterized in that** the rotor bearing (8) comprises at least one inner ring element (12) and at least one outer ring element (13), wherein at least one oil-lubricated sliding bearing element (14) is formed between the inner ring element (12) and the outer ring element (13), wherein the lubricating oil sump (18) is formed entirely in the nacelle housing (4), wherein the nacelle housing (4) is configured so as to be partible in the region of the lubricating oil sump (18).

## Revendications

1. Nacelle (2) pour une éolienne (1), cette nacelle (2) comprenant :
- un caisson de nacelle (4) ;
- un moyeu de rotor (6) ;
- un palier de rotor (8) pour le logement du moyeu de rotor (6) au niveau du caisson de nacelle (4), dans lequel, dans le caisson de nacelle (4) et/ou dans le moyeu de rotor (6), un carter d'huile de lubrification (18) est prévu pour le logement d'une huile de lubrification (19) pour l'élément de palier lisse (14), de sorte que le carter d'huile de lubrification (18) peut être rempli d'huile de lubrification (19) jusqu'à un niveau d'huile de lubrification (20), dans lequel au moins une portion du palier de rotor (8) est disposée dans le carter d'huile de lubrification (18) verticalement en dessous du niveau d'huile de lubrification (20), **caractérisée en ce que** le palier de rotor (8) comprend au moins un élément annulaire interne (12) et au moins un élément annulaire externe (13), dans lequel, entre l'élément annulaire interne (12) et l'élément annulaire externe (13), est prévu au moins un élément de palier lisse lubrifié (14), dans lequel le carter d'huile de lubrification (18) est disposé entièrement dans le caisson de nacelle (4), dans lequel le caisson de nacelle (4) est réalisé de manière divisible au niveau du carter d'huile de lubrification (18).

2. Nacelle (2) selon la revendication 1, **caractérisée en ce que** l'au moins un élément de palier lisse (14) est conçu comme palier lisse hydrodynamique qui peut être lubrifié dans dispositif d'augmentation de la pression.

3. Nacelle (2) selon la revendication 1 ou 2, **caractérisée en ce que**, dans l'élément annulaire interne (12) et/ou dans l'élément annulaire externe (13), est disposé au moins un alésage pour huile de lubrification (22) qui débouche directement dans le carter d'huile de lubrification (18).

4. Nacelle (2) selon l'une des revendications précédentes, **caractérisée en ce que**, entre le caisson de nacelle (4) et le moyeu de rotor (6) et/ou entre le caisson de nacelle (4) et un arbre de rotor (15), est prévu un élément d'étanchéité (24).

5. Nacelle (2) selon la revendication 1, **caractérisée en ce que** le caisson de nacelle (4) comprend une partie principale de caisson (35) et un couvercle de carter d'huile de lubrification (36).

6. Nacelle (2) selon l'une des revendications précédentes, **caractérisée en ce que** l'élément annulaire interne (12) est couplé avec le moyeu de rotor (6) et l'au moins un élément de palier lisse (14) est fixé à l'élément annulaire interne (12) et peut tourner par rapport à l'élément annulaire externe (13), dans lequel, entre l'élément de palier lisse (14) et l'élément annulaire externe (13), est réalisée une surface de glissement (17).

7. Nacelle (2) selon la revendication 6, **caractérisée en ce que**, dans l'élément annulaire externe (13), est disposé au moins un alésage pour huile de lubrification (23) qui débouche au niveau d'une première extrémité dans la surface de glissement (17) et, au niveau d'une deuxième extrémité, dans le carter d'huile de lubrification (18).

8. Nacelle (2) selon la revendication 7, **caractérisée en ce que**, dans l'élément annulaire externe (13), est réalisé un canal d'écoulement (27) circulaire au moins à certains endroits, qui sort plus particulièrement sous la forme d'une fente cunéiforme (31) et dans lequel débouche l'au moins un alésage pour huile de lubrification (23).

9. Nacelle (2) selon la revendication 8, **caractérisée en ce que**, sur la circonférence de l'élément annulaire externe (13), sont répartis plusieurs alésages pour huile de lubrification (23), dans lequel plusieurs des alésages pour huile de lubrification (23) débouchent dans le canal d'écoulement (27).

10. Nacelle (2) selon l'une des revendications précédentes, **caractérisée en ce que** le niveau d'huile de lubrification (20) est choisi de sorte que les surfaces de glissement (17) du palier de rotor (8) se trouvent, dans sa section transversale la plus basse, entièrement en dessous du niveau d'huile de lubrification (20).

11. Nacelle (2) selon l'une des revendications 4 à 10, **caractérisée en ce que** le niveau d'huile de lubrification (20) est choisi de sorte que l'élément d'étanchéité (24) se trouve au-dessus du niveau d'huile de lubrification (20).

12. Nacelle (2) selon l'une des revendications précédentes, **caractérisée en ce que** l'élément de palier lisse (14) comprend plusieurs patins de palier lisse (33) qui sont répartis sur la circonférence.

13. Nacelle (2) selon la revendication 12, **caractérisée en ce que** les patins de palier lisse (33) sont fixés, chacun à l'aide d'au moins un moyen de fixation (16), plus particulièrement une liaison vissée, à l'élément annulaire interne (12) ou à l'élément annulaire externe (13).

14. Nacelle (2) selon l'une des revendications précédentes, **caractérisée en ce que** l'élément de palier lisse (14) comprend une couche de polymère, dans lequel la couche de polymère comprend des particules de matière lubrifiante et de particules d'oxyde métallique et, en tant que polymère, exclusivement un polymère de polyimide ou un polymère de polyamide-imide ou un mélange de ceux-ci, dans lequel les particules d'oxyde métallique sont sélectionnées dans un groupe comprenant des vanadates de bismuth, des rutiles de chrome-antimoine et des mélanges de ceux-ci.

15. Éolienne (1) avec une nacelle (2), cette nacelle (2) comprenant :
- un caisson de nacelle (4) ;
- un moyeu de rotor (6) avec des pales de rotor disposées sur celui-ci ;
- un palier de rotor (8) pour le logement du moyeu de rotor (6) au niveau du caisson de nacelle (4), dans lequel, dans le caisson de nacelle (4) et/ou dans le moyeu de rotor (6), un carter d'huile de lubrification (18) est prévu pour le logement d'une huile de lubrification (19) pour l'élément de palier lisse (14), dans lequel le carter d'huile de lubrification (18) peut être rempli d'huile de lubrification (19) jusqu'à un niveau d'huile de lubrification (20), dans lequel au moins une portion du palier de rotor (8) est disposée dans le carter d'huile de lubrification (18) verticalement en dessous du niveau d'huile de lubrification (20), de sorte que cette portion du palier de rotor (8) est immergée dans l'huile de lubrification (19) contenue dans le carter d'huile de lubrification (18), **caractérisé en ce que** le palier de rotor (8) comprend au moins un élément annulaire interne (12) et au moins un élément annulaire externe (13), dans lequel, entre l'élément annulaire interne (12) et l'élément annulaire externe (13), est prévu au moins un élément de palier lisse lubrifié (14), dans lequel le carter d'huile de lubrification (18) est disposé entièrement dans le caisson de nacelle (4), dans lequel le caisson de nacelle (4) est réalisé de manière divisible au niveau du carter d'huile de lubrification (18).
